# EUROPÄISCHE PATENTSCHRIFT

(11) **EP 2 536 585 B1**
(45) Veröffentlichungstag und Bekanntmachung des Hinweises auf die Patenterteilung: **29.01.2014**
(21) Anmeldenummer: 11702795.3
(22) Anmeldetag: 03.02.2011
(51) Int. Cl.: B60W 50/16, B60K 26/02

(54) **KRAFTFAHRZEUG**
MOTOR VEHICLE
VOITURE

(30) Priorität: 20.02.2010 DE 102010008741
(43) Veröffentlichungstag der Anmeldung: 26.12.2012
(73) Patentinhaber: Audi AG, 85045 Ingolstadt (DE)
(72) Erfinder: SCHMIDT, Walter, 86643 Rennertshofen (DE); STAUBER, Alois, 85049 Ingolstadt (DE); SCHÜSSLER, Martin, 85092 Kösching (DE)
(74) Vertreter: Brandt, Kai
(86) Internationale Anmeldenummer: PCT/EP2011/000498
(87) Internationale Veröffentlichungsnummer: WO 2011/101095

(56) Entgegenhaltungen:
- DE-A1- 10 235 165
- DE-A1- 10 351 656
- DE-A1-102006 012 515
- DE-A1-102008 020 842
- GB-A- 2 339 841

## Beschreibung

Die Erfindung betrifft ein Kraftfahrzeug nach dem Oberbegriff des Patentanspruches 1.

Bei einem Kraftfahrzeug mit elektrischem Antrieb hängt das von der Elektromaschine bereitstellbare verfügbare Antriebsmoment von einer Vielzahl von Einflussgrößen ab. So kann es zum Beispiel aus thermischen Gründen in Abhängigkeit von der Außentemperatur, vom Fahrprofil (Leistungsanforderung über die Zeitdauer) und in Abhängigkeit von der Auslegung/Dimensionierung der Kühlmaßnahmen im Kraftfahrzeug bzw. an der Antriebskomponente zu einem Derating, das heißt zu einer Drosselung, der Antriebsleistung bzw. der Zugkraft am Fahrzeugrad kommen. Eine solche Drosselung ist beispielsweise dem Bauteilschutz (Vermeidung von Überhitzung) geschuldet. Dies gilt insbesondere für die elektrische Leistungsabgabe der Batterie und die Leistungswandlung im Antriebssystem (Leistungselektronik und elektrische Maschine). Außerdem hängt die Leistungsfähigkeit der Traktionsbatterie von weiteren Parametern ab, wie etwa Ladezustand, Alterung oder Temperatur.

Aus der DE 102 35 165 A1 ist ein gattungsgemäßes Kraftfahrzeug bekannt, bei dem eine insbesondere elektrische Antriebseinheit zur Erzeugung eines Antriebsmomentes vorgesehen ist. Das Kraftfahrzeug weist ein mit einer Rückstellkraft beaufschlagtes Fahrpedal auf, das zur Vorgabe eines Sollmomentes um einen Stellweg verstellbar ist. Auf der Grundlage des fahrerseitig eingestellten Sollmoments kann eine Steuereinrichtung die Antriebseinheit ansteuern, um ein Antriebsmoment zu erzeugen.

Das während eines Fahrbetriebs aktuell verfügbare Antriebsmoment kann in Abhängigkeit von bestimmten Fahrsituationen variieren. Bei bestimmten Fahrsituationen, etwa beim Ansetzen zu einem Überholvorgang, kann die Elektromaschine eine relativ hohe Antriebsleistung zum Beschleunigen und Halten einer bestimmten Fahrzeuggeschwindigkeit zur Verfügung stellen. Allerdings kann während einer solchen Fahrsituation das aktuell verfügbare Antriebsmoment aufgrund der oben genannten Parameter sinken, so dass die hohe Antriebsleistung nur kurzzeitig bereitstellbar ist.

Vor diesem Hintergrund sind Informationen über die Antriebsverfügbarkeit des Kraftfahrzeuges von großer Bedeutung für den Fahrer.

Die Aufgabe der Erfindung besteht darin, ein Kraftfahrzeug bereitzustellen, bei dem der Fahrer situationsbedingt über das jeweils aktuell verfügbare Antriebsmoment informiert wird.

Die Aufgabe ist durch die Merkmale des Patentanspruches 1 gelöst. Bevorzugte Weiterbildungen der Erfindung sind in den Unteransprüchen offenbart.

Gemäß dem kennzeichnenden Teil des Patentanspruches 1 ermittelt die oben genannte Steuereinrichtung ein aktuell verfügbares Antriebsmoment auf der Grundlage der oben genannten Einflussgrößen. In Abhängigkeit von dem für bestimmte Fahrsituationen jeweils aktuell verfügbaren Antriebsmoments kann dann die Steuereinrichtung die Kennlinie des Fahrpedals variieren, die die Rückstellkraft über den Stellweg des Fahrpedals wiedergibt. Im Unterschied zur Rückmeldung durch optische und/oder akustische Indikatoren erfolgt somit eine haptische Rückmeldung durch das Fahrpedal, die bei einer Änderung des aktuell verfügbaren Antriebsmoments intuitiv vom Fahrer erfasst werden kann. Durch entsprechende Änderungen der Rückstellkraft kann somit dem Fahrer nahegelegt werden, die Fahrzeuggeschwindigkeit aufgrund eines sich verringernden verfügbaren Antriebsmomentes zu drosseln.

Zur technischen Ausführung der Erfindung eignen sich insbesondere sogenannte Force-Feedback-Fahrpedale, wie sie beispielhaft aus der DE 10 2008 020 842 A1 bekannt sind. Bei einem solchen Fahrpedal kann durch entsprechende Ansteuerung der Steuereinrichtung der Kennlinienverlauf des Fahrpedals geändert werden. Über derartige Fahrpedale kann daher der Fahrer nicht nur in Abhängigkeit von der gewählten Fahrpedalstellung die gewünschte Antriebsleistung/-moment der Steuereinrichtung mitteilen. Im Gegenzug kann das Fahrpedal durch eine sich situationsbedingt verändernde Rückstellkraft dem Fahrer einen unmittelbaren Eindruck darüber vermitteln, ob bzw. in welchem Maße die Antriebsleistung bzw. das Antriebsmoment zur Verfügung steht.

In einer bevorzugten Ausführungsform kann bei einem von der Steuereinrichtung ermittelten Anstieg des aktuell verfügbaren Antriebsmomentes die Steigung der Pedalkennlinie zumindest bereichsweise reduziert werden. Entsprechend reduziert sich daher der Gegendruck bei einer fahrerseitigen Pedalbetätigung, was dem Fahrer nahelegt, dass ausreichend Antriebsmoment verfügbar ist. Umgekehrt kann bei einer Verringerung des aktuell verfügbaren Antriebsmomentes die Steuereinrichtung die Steigung der Pedalkennlinie zumindest bereichsweise erhöhen. In diesem Fall steigt also bei Pedalbetätigung der Gegendruck, was dem Fahrer eine nur begrenzte Verfügbarkeit des Antriebsmomentes signalisiert.

Alternativ oder zusätzlich dazu kann innerhalb des Stellbereiches des Fahrpedals zumindest ein Druckpunkt oder eine Kraftstufe vorhanden sein. Diese kann bei Pedalbetätigung durch eine kurzzeitige Erhöhung des Gegendruckes vom Fahrer wahrgenommen werden. Der Druckpunkt kann in Abhängigkeit von dem aktuell verfügbaren Antriebsmoment an unterschiedlichen Stellwegpositionen innerhalb des Stellbereiches des Fahrpedals positioniert werden. So kann die Steuereinrichtung bei ausreichend verfügbarem Antriebsmoment den Druckpunkt innerhalb des Stellbereiches von der Ruhestellung des Fahrpedals wegbewegen. Im Gegenzug kann zum Beispiel bei Eintritt bestimmter Fahrsituationen, die eine hohe Antriebsleistung erfordern, der Druckpunkt innerhalb des Stellbereiches in Richtung auf die Ruhestellung des Fahrpedals verlagert werden. Dies signalisiert dem Fahrer ein mit Bezug auf die aktuelle Fahrsituation lediglich begrenzt vorhandenes Antriebsmoment.

Um den Fahrer noch detaillierte Rückmeldung über das aktuell verfügbare Antriebsmoment zu geben, kann der oben genannte Druckpunkt Teilstellbereiche voneinander trennen, innerhalb welcher die Kennlinie mit unterschiedlichen Steigungen verläuft. So kann besonders bevorzugt in einem zwischen der Fahrpedal-Ruhestellung und dem Druckpunkt vorhandenen ersten Teilbereich die Steigung der Kennlinie kleiner sein als in einem zweiten Teilbereich, der nach dem Überschreiten des Druckpunktes folgt. Der Kennlinienverlauf im ersten und im zweiten Stellbereich kann dabei bevorzugt jeweils linear sein, wodurch der Druckpunkt am Übergang zwischen den beiden Teilstellbereichen intuitiv besonders gut vom Fahrer wahrnehmbar ist.

Zusätzlich zum ersten Druckpunkt kann ein zweiter Druckpunkt innerhalb des Pedal-Stellbereiches vorgesehen sein, der zwischen dem ersten Druckpunkt und einem Bewegungsanschlag des Fahrpedals positioniert ist, an dem das Fahrpedal bei vollem Durchdrücken anschlägt. Bei Überschreiten dieses zweiten Druckpunktes kann einerseits der Fahrerwunsch zur maximalen Leistungsabgabe des Kraftfahrzeuges der Steuereinrichtung übermittelt werden. Andererseits erhält der Fahrer eine Rückmeldung darüber, dass im Gegenzug die Zeitdauer bis zu einem systembedingten Leistungsabfall entsprechend verkürzt ist.

Nachfolgend ist ein Ausführungsbeispiel der Erfindung anhand der beigefügten Figuren beschrieben.

Es zeigen:
- Fig. 1: einen Antriebsstrang des Kraftfahrzeuges in schematischer Darstellung; und
- Fig. 2: eine Kennlinie des Fahrpedals des Kraftfahrzeuges, die die Rückstellkraft über den Pedalstellweg wiedergibt.

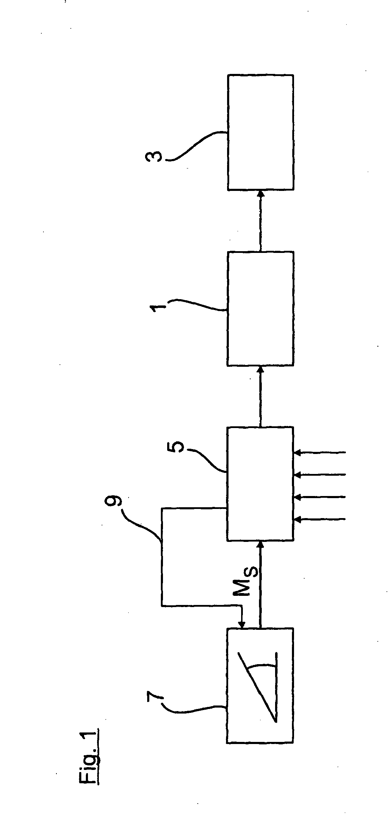

In der Fig. 1 sind in grob schematischer Darstellung die wesentlichen Antriebskomponenten eines Kraftfahrzeuges mit elektrischem Antrieb gezeigt. Das Kraftfahrzeug weist als Antriebseinheit eine Elektromaschine 1 auf, die über einen Antriebsstrang mit einer Getriebeeinrichtung 3 gekoppelt ist. Mittels der Getriebeeinrichtung 3 kann das von der Elektromaschine 1 erzeugte Antriebsmoment auf nicht dargestellte Antriebsräder übertragen werden. Die Elektromaschine 1 ist mittels einer elektronischen Steuereinrichtung 5 ansteuerbar, die als Eingangsgrößen eine Vielzahl von Fahrzeugbetriebsparametern erfasst, etwa eine Außentemperatur, den Ladezustand bzw. die Temperatur der hier nicht dargestellten Batterie oder sonstige FahrprofilParameter. Unter anderem ist die Steuereinrichtung 5 mit einem Fahrpedal 7 verbunden. In Abhängigkeit von dem Auslenkwinkel des Fahrpedals 7 wird der Steuereinrichtung 1 eine, einem Sollmoment M_{S} entsprechende Vorgabe zugeführt. Auf der Grundlage des Sollmoments M_{S}, das den Fahrerwunsch wiederspiegelt, steuert die Steuereinrichtung 5 die Elektromaschine 1 an.

Gleichzeitig ermittelt die Steuereinrichtung 5 auf der Grundlage der relevanten Einflussgrößen das im Fahrbetrieb aktuell verfügbare Antriebsmoment.

Das Fahrpedal 7 ist vorliegend als ein sogenanntes Force-Feedback-Pedal ausgebildet, dessen Pedalkennlinie in Abhängigkeit von entsprechenden Steuersignalen der Steuereinrichtung 5 variierbar ist. Hierzu ist die Steuereinrichtung 5 über die Signalleitung 9 mit dem Fahrpedal 7 in Verbindung. Während des Fahrbetriebes ermittelt die Steuereinrichtung 5 ein aktuell verfügbares Antriebsmoment auf der Grundlage relevanter Einflussgrößen, wie etwa der Außentemperatur, dem Fahrprofil oder dem Ladezustand der Batterie. Auf der Grundlage des ermittelten aktuell verfügbaren Antriebsmomentes kann dann die Steuereinrichtung 5 den Verlauf der Kennlinie des Fahrpedals 7 beeinflussen, um dem Fahrer eine Rückmeldung über die Antriebsverfügbarkeit zu geben.

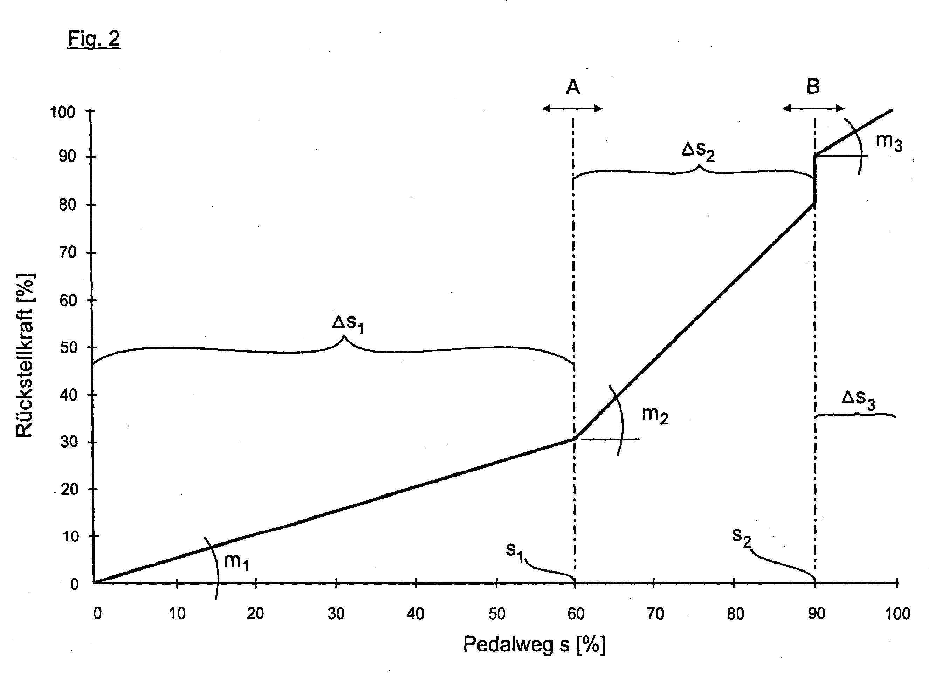

In der Fig. 2 ist beispielhaft eine Kennlinie des Fahrpedals 7 gezeigt, die die Rückstellkraft F_{R} über den Pedalstellweg s wiedergibt.

Innerhalb des Stellweges s sind an unterschiedlichen Stellwegpositionen s₁, s₂ Druckpunkte A, B vorhanden. Jeder dieser Druckpunkte A, B trennt Teilstellbereiche Δs₁, Δs₂ und Δs₃, voneinander. In jedem dieser Teilstellbereich verläuft die Kennlinie linear sowie mit unterschiedlichen Steigungen m₁, m₂ und m₃. Dabei ist die Steigung m₁ im ersten Teilbereich Δs₁ zwischen der Ruhestellung des Fahrpedals 7 und dem ersten Druckpunkt A vergleichsweise gering gewählt. Entsprechend ist auch die Rückstellkraft F_{R} im ersten Stellbereich Δs₁ des Fahrpedals 7 gering, wodurch dem Fahrer vermittelt werden kann, dass sich die von ihm gewählte Pedalstellung in einem energetisch sinnvollen Bereich befindet, in welchem ein ausreichendes Antriebsmoment und eine größere Reichweite zur Verfügung gestellt werden kann.

Der zweite Stellbereich Δs₂ erstreckt sich zwischen den beiden Druckpunkten A, B, wobei die Steigung m₂ in diesem Bereich größer als im ersten Bereich Δs₁ gewählt ist. Entsprechend steigt im zweiten Teilbereich Δs₂ die Rückstellkraft F_{R} bei weiterem Eindrücken des Pedals stärker an. Dadurch erhält der Fahrer die Rückmeldung, dass er sich nunmehr in einem energetisch nicht mehr sinnvollen Bereich befindet, in welchem nur für einen begrenzten Zeitraum die Antriebsleistung zur Verfügung gestellt werden kann, jedoch danach ein systembedingter Leistungsabfall ansteht und auch eine verringerte Gesamtreichweite zurücklegen lässt.

Der zweite Druckpunkt B kann gemäß dem Kennlinienverlauf der Fig. 2 erst durch eine übermäßige Erhöhung der Betätigungskraft durch den Fahrer überschritten werden. Bei Überschreiten des zweiten Druckpunktes B wird der Steuereinrichtung 5 der Fahrerwunsch zur maximalen Leistungsabgabe des Kraftfahrzeuges mitgeteilt. Entsprechend erhält der Fahrer über die sprunghaft angestiegene Rückstellkraft F_{R} die Rückmeldung, dass sich die Zeitdauer bis zu dem systembedingten Leistungsabfall entsprechend weiter verkürzt hat.

Die Druckpunkte A und B sind in Abhängigkeit von dem ermittelten Antriebsmoment verschiebbar. So kann bei einem erfassten Anstieg des aktuell verfügbaren Antriebsmomentes jeder der Druckpunkte A, B innerhalb des Stellwegs s von der Ruhestellung des Fahrpedals 9 wegbewegt werden. Im Gegenzug kann bei einer ermittelten Verringerung des aktuell verfügbaren Antriebsmoments der Druckpunkt A und/oder B innerhalb des Stellwegs s in Richtung auf die Ruhestellung des Fahrpedals verlagert werden.

## Patentansprüche

1. Kraftfahrzeug mit zumindest einer elektrischen Antriebseinheit (1) zur Erzeugung eines Antriebsmoments, einem mit einer Rückstellkraft (F_{R}) beaufschlagten Fahrpedal (7), das zur Vorgabe eines Sollmoments (M_{S}) um einen Stellweg verstellbar ist, und einer Steuereinrichtung (5), die auf der Grundlage des Sollmoments (M_{S}) die Antriebseinheit (1) ansteuert, **dadurch gekennzeichnet, dass** die Steuereinrichtung (5) zusätzlich ein aktuell von der Antriebseinheit (1) verfügbares Antriebsmoment ermittelt, und in Abhängigkeit des aktuell von der Antriebseinheit (1) verfügbaren Antriebsmoments die Kennlinie des Fahrpedals (7) variiert, die die Rückstellkraft (F_{R}) über den Stellweg des Fahrpedals (7) wiedergibt.

2. Kraftfahrzeug nach Anspruch 1, **dadurch gekennzeichnet, dass** bei einem Anstieg des aktuell von der Antriebseinheit (1) verfügbaren Antriebsmoments die Steuereinrichtung (5) die Steigung (m₁, m₂, m₃) der Kennlinie zumindest bereichsweise reduziert.

3. Kraftfahrzeug nach Anspruch 1 oder 2, **dadurch gekennzeichnet, dass** bei einer Verringerung des aktuell von der Antriebseinheit (1) verfügbaren Antriebsmoments die Steuereinrichtung (5) die Steigung (m₁, m₂, m₃) der Kennlinie zumindest bereichsweise erhöht.

4. Kraftfahrzeug nach einem der Ansprüche 1, 2 oder 3, **dadurch gekennzeichnet, dass** innerhalb des Stellbereiches (s) des Fahrpedals (7) zumindest ein Druckpunkt (A, B) vorhanden ist, der in Abhängigkeit von dem aktuell von der Antriebseinheit (1) verfügbaren Antriebsmoment an unterschiedlichen Stellwegpositionen (S₁, S₂) innerhalb des Stellbereichs (**s**_{ges}) des Fahrpedals (7) positionierbar ist.

5. Kraftfahrzeug nach Anspruch 4, **dadurch gekennzeichnet, dass** bei einem Anstieg des aktuell von der Antriebseinheit (1) verfügbaren Antriebsmoments die Steuereinrichtung (5) den Druckpunkt (A, B) innerhalb des Stellbereichs (**s**_{ges}) von der Ruhestellung des Fahrpedals (7) wegbewegt.

6. Kraftfahrzeug nach Anspruch 4 oder 5, **dadurch gekennzeichnet, dass** bei einer Verringerung des aktuell von der Antriebseinheit (1) verfügbaren Antriebsmoments die Steuereinrichtung (5) den Drehpunkt (A, B) innerhalb des Stellbereichs (**s**_{ges}) in Richtung auf die Ruhestellung des Fahrpedals (7) bewegt.

7. Kraftfahrzeug nach einem der Ansprüche 4, 5 oder 6, **dadurch gekennzeichnet, dass** der Druckpunkt (A, B) Teilstellbereiche (Δs₁, Δs₂, Δs₃) voneinander trennt, innerhalb welcher die Kennlinie mit unterschiedlichen Steigungen (m₁, m₂, m₃) verläuft.

8. Kraftfahrzeug nach Anspruch 7, **dadurch gekennzeichnet, dass** die Steigung (m₁) der Kennlinie im ersten Teilbereich (Δs₁) zwischen der Fahrpedal-Ruhestellung und dem Druckpunkt (A) kleiner ist als im zweiten Teilstellbereich (Δs₂), der nach dem Überschreiten des Druckpunkts (A) folgt.

9. Kraftfahrzeug nach einem der vorhergehenden Ansprüche 4 bis 8, **dadurch gekennzeichnet, dass** innerhalb des Stellbereiches (**s**_{ges}) des Fahrpedals ein zweiter Druckpunkt (B) vorhanden ist, der zwischen dem ersten Druckpunkt (A) und einem Bewegungsanschlag für das Fahrpedal (7) positioniert ist, an dem das Fahrpedal (7) bei vollem Durchdrücken anschlägt.

10. Kraftfahrzeug nach einem der vorhergehenden Ansprüche, **dadurch gekennzeichnet, dass** die Antriebseinheit (1) zumindest eine Elektromaschine aufweist.

## Claims

1. Motor vehicle comprising at least one electric drive unit (1) for generating a driving torque, an accelerator pedal (7) which is acted upon by a restoring force (F_{R}) and can be adjusted over an adjustment path for setting a target torque (M_{S}), and a control device (5) which actuates the drive unit (1) on the basis of the target torque (M_{S}), **characterised in that** the control device (5) additionally determines a driving torque currently available from the drive unit (1), and varies the characteristic curve of the accelerator pedal (7) depending on the driving torque currently available from the drive unit (1), which characteristic curve reproduces the restoring force (F_{R}) over the adjustment path of the accelerator pedal (7).

2. Motor vehicle according to claim 1, **characterised in that** when the driving torque currently available from the drive unit (1) increases, the control device (5) reduces the gradient (m₁, m₂, m₃) of the characteristic curve at least in regions.

3. Motor vehicle according to either claim 1 or claim 2, **characterised in that** when the driving torque currently available from the drive unit (1) decreases, the control device (5) increases the gradient (m₁, m₂, m₃) of the characteristic curve at least in regions.

4. Motor vehicle according to any of claims 1 to 3, **characterised in that** at least one pressure point (A, B) is provided within the adjustment region (s) of the accelerator pedal (7), which pressure point can be positioned at various adjustment-path positions (S₁, S₂) within the adjustment region (**s**_{ges}) of the accelerator pedal (7) depending on the driving torque currently available from the drive unit (1).

5. Motor vehicle according to claim 4, **characterised in that** when the driving torque currently available from the drive unit (1) increases, the control device (5) moves the pressure point (A, B) away from the rest position of the accelerator pedal (7) within the adjustment region (**s**_{ges}).

6. Motor vehicle according to either claim 4 or claim 5, **characterised in that** when the driving torque currently available from the drive unit (1) decreases, the control device (5) moves the pressure point (A, B) towards the rest position of the accelerator pedal (7) within the adjustment region (**s**_{ges}).

7. Motor vehicle according to any of claims 4 to 6, **characterised in that** the pressure point (A, B) separates adjustment subregions (Δs₁, Δs₂, Δs₃) from each other, within which the characteristic curve extends at different gradients (m₁, m₂, m₃).

8. Motor vehicle according to claim 7, **characterised in that** the gradient (m₁) of the characteristic curve in the first subregion (Δ**s**₁) between the rest position of the accelerator pedal and the pressure point (A) is smaller than in the second adjustment subregion (Δ**s**₂) which follows after the pressure point (A) has been exceeded.

9. Motor vehicle according to any of the preceding claims 4 to 8, **characterised in that** a second pressure point (B) is provided within the adjustment region (**s**_{ges}) of the accelerator pedal, which pressure point is positioned between the first pressure point (A) and a movement stop for the accelerator pedal (7), against which stop the accelerator pedal (7) presses when fully pushed down.

10. Motor vehicle according to any of the preceding claims, **characterised in that** the drive unit (1) has at least one electric machine.

## Revendications

1. Véhicule automobile comprenant au moins une unité d'entraînement (1) électrique servant à générer un couple d'entraînement, une pédale d'accélération (7) soumise à l'action d'une force de rappel (F_{R}), laquelle peut être déplacée d'une course de réglage afin de prédéfinir un couple de consigne (M_{S}), et un dispositif de commande (5), qui commande l'unité d'entraînement (1) sur la base du couple de consigne (M_{S}), **caractérisé en ce que** le dispositif de commande (5) détermine en outre un couple d'entraînement fourni dans l'instant par l'unité d'entraînement (1) et fait varier, en fonction du couple d'entraînement fourni dans l'instant par l'unité d'entraînement (1), la courbe caractéristique de la pédale d'accélération (7), laquelle reproduit la force de rappel (F_{R}) sur la course de réglage de la pédale d'accélération (7).

2. Véhicule automobile selon la revendication 1, **caractérisé en ce que** dans le cas d'une augmentation du couple d'entraînement fourni dans l'instant par l'unité d'entraînement (1), le dispositif de commande (5) réduit au moins par endroit la pente (m₁, m₂, m₃) de la courbe caractéristique.

3. Véhicule automobile selon la revendication 1 ou 2, **caractérisé en ce que** dans le cas d'une réduction du couple d'entraînement fourni dans l'instant par l'unité d'entraînement (1), le dispositif de commande (5) augmente au moins par endroits la pente (m₁, m₂, m₃) de la courbe caractéristique.

4. Véhicule automobile selon l'une quelconque des revendications 1, 2 ou 3, **caractérisé en ce qu'**au moins un point de rotation (A, B) est présent dans le cadre de la plage de réglage (s) de la pédale d'accélération (7), lequel peut être positionné en différentes positions de la course de réglage (S₁, S₂) dans le cadre de la plage de réglage (**s**_{ges}) de la pédale d'accélération (7), en fonction du couple d'entraînement fourni dans l'instant par l'unité d'entraînement (1).

5. Véhicule automobile selon la revendication 4, **caractérisé en ce que** dans le cas d'une augmentation du couple de rotation fourni dans l'instant par l'unité d'entraînement (1), le dispositif de commande (5) éloigne le point de rotation (A, B) dans le cadre de la plage de réglage (s_{ges}) de la position de repos de la pédale d'accélération (7).

6. Véhicule automobile selon la revendication 4 ou 5, **caractérisé en ce que** dans le cas d'une réduction du couple d'entraînement fourni dans l'instant par l'unité d'entraînement (1), le dispositif de commande (5) déplace le point de rotation (A, B) dans le cadre de la plage de réglage (s_{ges}) en direction de la position de repos de la pédale d'accélération (7).

7. Véhicule automobile selon l'une quelconque des revendications 4, 5 ou 6, **caractérisé en ce que** le point de rotation (A, B) sépare les unes des autres des plages de réglage partiel (ΔS₁, ΔS₂, ΔS₃), dans le cadre desquelles s'étend la courbe caractéristique avec différentes pentes (m₁, m₂, m₃).

8. Véhicule automobile selon la revendication 7, **caractérisé en ce que** la pente (m₁) de la courbe caractéristique située dans la première plage de réglage partiel (ΔS₁) entre la position de repos de la pédale d'accélération et le point de rotation (A) est inférieure à celle de la deuxième plage de réglage partiel (ΔS₂), qui vient après le dépassement du point de rotation (A).

9. Véhicule automobile selon l'une quelconque des revendications précédentes 4 à 8, **caractérisé en ce qu'**est présent dans le cadre de la plage de réglage (s_{ges}) de la pédale d'accélération, un deuxième point de rotation (B) qui est positionné entre le premier point de rotation (A) et une butée de déplacement destinée à la pédale d'accélération (7), contre laquelle la pédale d'accélération (7) vient buter lorsqu'elle est complètement enfoncée.

10. Véhicule automobile selon l'une quelconque des revendications précédentes, **caractérisé en ce que** l'unité d'entraînement (1) présente au moins un moteur électrique.
